# EUROPÄISCHE PATENTSCHRIFT

(11) **EP 2 871 447 B1**
(45) Veröffentlichungstag und Bekanntmachung des Hinweises auf die Patenterteilung: **01.03.2017**
(21) Anmeldenummer: 13306530.0
(22) Anmeldetag: 08.11.2013
(51) Int. Cl.: G01D 11/24, G01K 7/22, G01K 13/08, G01P 1/02, G01P 3/44, G01P 3/487

(54) **ANORDNUNG ZUR ÜBERWACHUNG EINES SICH UM SEINE ACHSE DREHENDEN BAUTEILS MIT EINEM DREHZAHLSENSOR UND EINEM TEMPERATURSENSOR**
ARRANGEMENT FOR MONITORING A COMPONENT ROTATING AROUND ITS AXIS WITH A ROTATIONAL SPEED SENSOR AND A TEMPERATURE SENSOR
DISPOSITIF DE SURVEILLANCE D'UN COMPOSANT TOURNANT AUTOUR DE SON AXE AVEC UN SENSEUR DE VITESSE DE ROTATION ET UN SENSEUR DE TEMPÉRATURE

(43) Veröffentlichungstag der Anmeldung: 13.05.2015
(73) Patentinhaber: Nexans, 75008 Paris (FR)
(72) Erfinder: Riedel, Richard, 92685 Floß (DE); Völkl, Dietmar, 95703 Plössberg (DE); Bock, Norbert, 95478 Kemnath (DE)
(74) Vertreter: Döring, Roger

(56) Entgegenhaltungen:
- EP-A1- 1 211 500
- EP-A1- 1 879 032
- EP-A2- 1 239 710
- DE-A1-102012 200 091
- US-A1- 2007 119 249
- US-A1- 2010 332 074

## Beschreibung

Die Erfindung bezieht sich auf eine Anordnung zur Überwachung der Drehzahl eines sich um seine Achse drehenden Bauteils gemäß dem Oberbegriff des Patentanspruchs 1.

Eine derartige Anordnung wird bei modernen Kraftfahrzeugen - im folgenden kurz "Fahrzeugen" genannt - eingesetzt, um beispielsweise die Drehzahl von Getrieberädern überwachen zu können. Das gilt insbesondere für Fahrzeuge mit automatisch arbeitenden Getrieben, bei denen für das Umschalten in eine andere Getriebestufe eine genaue Aussage über die tatsächliche Drehzahl der Getrieberäder benötigt wird. Außerdem wird in bekannter Technik im ABS-System von Fahrzeugen eine Überwachung der Drehzahl der Räder durchgeführt, um gegebenenfalls einen kompletten Stillstand derselben zu verhindern. Besonders bei automatisch arbeitenden Getrieben wird außerdem mit Vorteil die in denselben herrschende Temperatur überwacht. Dazu wird ein vom Drehzahlsensor unabhängiger Temperatursensor eingesetzt, der separat montiert werden muß.

Die US 2010/0332074 A beschreibt eine in einem Kraftfahrzeug zu montierende Anordnung, bei welcher eine Vielzahl von unterschiedlichen Sensoren auf einer mit Leiterbahnen ausgerüsteten Schaltkarte angebracht ist. Zu den Sensoren können auch ein Drehzahlsensor und ein Temperatursensor gehören. Die Sensoren können einseitig oder beidseitig auf der Schaltkarte angebracht sein. Die Anordnung ist mit von derselben abstehenden, stiftförmigen Signalabschlüssen ausgerüstet. Sie ist von einem als Satellitengehäuse bezeichneten Gehäuse umgeben.

Der Erfindung liegt die Aufgabe zugrunde, die eingangs geschilderte Anordnung so zu gestalten, daß neben der Drehzahl eines Bauteils auch die Temperatur in dessen Umgebung auf einfache Weise überwacht werden kann.

Diese Aufgabe wird von einer Anordnung mit den Merkmalen des Patentanspruchs 1 gelöst.

Diese aus zwei Sensoren mit unterschiedlicher Funktion aufgebaute Anordnung ist einfach zu montieren, weil für die Überwachung von Drehzahl einerseits und Temperatur andererseits nur ein einteiliges, kombiniertes Sensorelement im Bereich des zu überwachenden Bauteils angeordnet werden muß. Durch den Schutzkörper, welcher den mit den Sensoren bestückten Träger umgibt, sind die Sensoren außerdem feuchtigkeitsdicht eingebettet, so daß sie auch rauhere Bedingungen unbeschadet überstehen, wie sie beim Betrieb von Fahrzeugen auftreten. Am Schutzkörper ist ein von demselben abstehendes Befestigungselement angebracht, durch welches sichergestellt werden kann, daß der Drehzahlsensor- beispielsweise und vorzugsweise ein Hallsensor - so lagerichtig montiert werden kann, daß er stets einwandfreie Meßwerte liefert.

In einer bevorzugten Ausführungsform ist parallel zum Drehzahlsensor als EMV-Schutz ein Kondensator angeschlossen, der ebenfalls mit in den Schutzkörper eingebettet ist.

Ein Ausführungsbeispiel des Erfindungsgegenstandes ist in den Zeichnungen dargestellt. Es zeigen:
Fig. 1 und 2 die Anordnung nach der Erfindung in zwei unterschiedlichen Ansichten.
Fig. 3 die miteinander verbundenen Einzelteile der Anordnung nach den Fig. 1 und 2 in vergrößerter Darstellung.
Fig. 4 und 5 eine Einzelheit der Anordnung in wieder verkleinerter Darstellung.

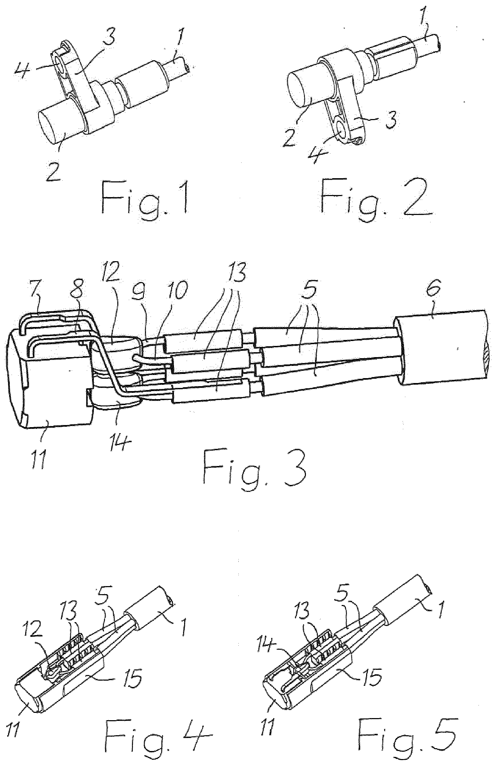

In den Fig. 1 und 2 ist die fertige Anordnung nach der Erfindung in zwei unterschiedlichen perspektivischen Ansichten gezeigt, in welcher die Einzelteile der

Anordnung und das Ende einer elektrischen Leitung 1, welche mit einer nicht mit dargestellten Auswerteeinheit verbunden ist, von einem durch Spritzgießen hergestellten Schutzkörper 2 umschlossen sind. Der Schutzkörper 2 besteht beispielsweise aus Polyamid (PA) oder Polybutylentherephtalat (PBT). Er hat ein von demselben abstehendes Befestigungselement 3, das zur lagerichtigen Montage der Anordnung am Einsatzort dient. Es kann dazu beispielsweise mit einem Durchgangsloch 4 versehen sein.

Die Leitung 1 ist beispielsweise eine vieradrige elektrische Leitung, in welcher vier Adern 5 angeordnet sind, die von einem gemeinsamen Mantel 6 aus Isoliermaterial umgeben sind, der beispielsweise aus Polyurethan besteht. Jede Ader 5 hat einen elektrischen Leiter, vorzugsweise einen Kupferleiter, der jeweils von einer Isolierung umgeben ist, die beispielsweise aus Polyurethan oder Polyethylen besteht. Die Leiter sind mit 7, 8, 9 und 10 bezeichnet. An die Leiter 7 und 8 ist gemäß Fig. 3 ein Drehzahlsensor 11 elektrisch leitend angeschlossen. Ein Temperatursensor 12 ist elektrisch leitend mit den Leitern 9 und 10 verbunden. Die jeweiligen elektrischen Verbindungsstellen befinden sich in Aderendhülsen 13. Sie bestehen aus Metall, wie beispielsweise Messing oder einer Messinglegierung.

Als Drehzahlsensor 11 ist mit Vorteil ein Hallsensor eingesetzt, der auf eine Änderung eines auf ihn einwirkenden Magnetfeldes reagiert. Der Temperatursensor 12 ist mit Vorteil ein elektrischer Widerstand mit einem negativen Temperaturkoeffizienten, ein sogenannter NTC-Widerstand. Parallel zum Drehzahlsensor 11 ist in bevorzugter Ausführungsform ein Kondensator 14 an die Leiter 7 und 8 angeschlossen, welcher zum Schutz der Anordnung gegenüber elektromagnetischen Feldern dient.

Zur Anordnung gehört gemäß den Fig. 4 und 5 ein aus mechanisch stabilem Isoliermaterial, wie beispielsweise PA oder PBT, bestehender Träger 15, der als etwa rechteckiges Bauteil ausgeführt ist. Der Träger 15 hat Vertiefungen bzw. Aussparungen zur Aufnahme der in Fig. 3 dargestellten und im Vorangehenden geschilderten Einzelteile.

Zur Herstellung der Anordnung nach der Erfindung wird beispielsweise wie folgt vorgegangen:
Vom Ende der vieradrigen elektrischen Leitung 1 wird der Mantel 6 entfernt, so daß die Adern 5 freiliegen. Danach oder gleichzeitig werden die Adern 5 an ihren Enden abisoliert, so daß die Leiter 7 bis 10 zur elektrisch leitenden Verbindung mit den beiden Sensoren 11 und 12 zur Verfügung stehen. Danach werden die jeweiligen elektrischen Verbindungen hergestellt, von denen jede in einer der Aderendhülsen 13 angeordnet ist. Dabei wird der Drehzahlsensor 11 an die Leiter 7 und 8 angeschlossen, während der Temperatursensor 12 an die Leiter 9 und 10 angeschlossen wird. In bevorzugter Ausführungsform wird auch der Kondensator 14 parallel zum Drehzahlsensor 11 an die Leiter 7 und 8 angeschlossen.

An dem so vorbereiteten bzw. bestückten Ende der Leitung 1 wird daraufhin der Träger 15 angebracht. Dabei wird der Drehzahlsensor 11 entsprechend den Fig. 4 und 5 in eine nach außen offene Ausnehmung an einer Stirnseite des Trägers 15 eingesetzt. Der Temperatursensor 12 (Fig. 4) und der Kondensator 14 (Fig. 5) werden ebenso in Vertiefungen des Trägers 15 eingesetzt, wie die Aderendhülsen 13. Danach liegt der Drehzahlsensor 11 an dem freien stirnseitigen Ende des Trägers 15, während die Leitung 1 mit den Adern 5 am anderen stirnseitigen Ende des Trägers 15 angeordnet ist.

Der im geschilderten Sinne bestückte Träger 15 wird abschließend einschließlich der Adern 5 und des Endes der Leitung 1 in ein Spritzgießwerkzeug eingelegt, in welchem der Schutzkörper 2 so um die Anordnung herumgespritzt wird, daß der Drehzahlsensor 11 an der Stirnseite desselben durch eine dünne Schicht abgedeckt ist, die beispielsweise bei 0,5 mm liegt. Die Schicht ist so bemessen, daß auch der Drehzahlsensor 11 feuchtigkeitsdicht abgedeckt ist, ohne daß seine Funktion beeinträchtigt ist. Der Schutzkörper 2 ragt bis über den Mantel 6 der Leitung 1, so daß sich eine feuchtigkeitsdichte Einbettung der geschilderten Anordnung ergibt.

## Patentansprüche

1. Anordnung zur Überwachung der Drehzahl eines sich um seine Achse drehenden, in einem Kraftfahrzeug angeordneten Bauteils, bei welcher in unmittelbarer Nähe des Bauteils ein die Drehzahl desselben erfassender Drehzahlsensor (11) angeordnet ist, der über jeweils einen isolierten Leiter aufweisende Adern (5) einer elektrischen Leitung (1) mit einer im Kraftfahrzeug angeordneten Auswerteeinheit verbunden ist, **dadurch gekennzeichnet,**
- **daß** der Drehzahlsensor (11) gemeinsam mit einem Temperatursensor (12), der ebenfalls über Adern (5) der elektrischen Leitung (1) mit der Auswerteeinheit verbunden ist, auf einem Träger (15) aus mechanisch stabilem Kunststoff angebracht ist,
- **daß** der Drehzahlsensor (11) in einer nach außen offenen, an der Stirnseite des Trägers (15) befindlichen Ausnehmung angeordnet ist,
- **daß** die beiden Sensoren (11,12) einschließlich des dieselben tragenden Trägers (15) feuchtigkeitsdicht in einen durch Spritzgießen hergestellten Schutzkörper (2) aus Isoliermaterial eingebettet sind, der sich bis über die Leitung (1) erstreckt, und
- **daß** der Schutzkörper (2) ein von demselben abstehendes Befestigungselement (3) zur lagerichtigen Montage der Anordnung in dem Kraftfahrzeug aufweist.

2. Anordnung nach Anspruch 1, **dadurch gekennzeichnet, daß** parallel zum Drehzahlsensor (11) ein Kondensator (14) an dessen Adern (5) der elektrischen Leitung (1) angeschlossen ist, der ebenfalls in den Schutzkörper (2) eingebettet ist.

## Claims

1. Arrangement for monitoring the rate of rotation of a structural component of a motor vehicle which rotates about its axis, wherein a speed sensor (11) for determining the rate of rotation is mounted in the immediate vicinity of the structural component, which is connected by conductors (5) of an electrical line (1) comprising each an insulated wire to an evaluating unit which is arranged in the motor vehicle, **characterized in**
- **that** the speed sensor (11), together with a temperature sensor (12) which is also connected to the evaluating unit by conductors (5) of the electrical line (1), is mounted on a support (15) of mechanically stable plastic material,
- **that** the speed sensor (11) is mounted within a recess of the support (15) which is open to the outside and placed at the front side of the same,
- **that** the two sensors (11,12) inclusive the support (15) which carries the same are embedded into a protection body (2) of insulating material which is produced by injection molding and extends beyond the line, and
- **that** the protecting body (2) has a fastening element (3) protruding from the same for the positionally correct mounting of the arrangement within the motor vehicle.

2. Arrangement according to claim 1, **characterized in that** in parallel to the speed sensor (11) a capacitor (14) is connected to the conductors (5) of its electrical line (1), which also is embedded into the protection body (2).

## Revendications

1. Dispositif de surveillance de la vitesse de rotation d'un composant tournant autour de son axe, disposé dans un véhicule automobile, dans lequel il est prévu un capteur de vitesse de rotation (11) à proximité immédiate du composant, qui détecte la vitesse de rotation de ce dernier et qui est connecté par l'intermédiaire d'un fil (5) comportant un conducteur isolé respectif d'une ligne électrique (1) à une unité d'analyse disposée dans le véhicule automobile, **caractérisé en ce**
- **que** le capteur de vitesse de rotation (11) est monté, en association avec un capteur de température (12), qui est également connecté par l'intermédiaire de fils (5) de la ligne électrique (1) à l'unité d'analyse, sur un support (15) constitué d'un matériau mécaniquement stable,
- **que** le capteur de vitesse de rotation (11) est disposé dans un évidement ouvert vers l'extérieur situé sur la face avant du support (15),
- **que** les deux capteurs (11, 12), y compris le support (15) qui les porte sont incorporés de manière étanche à l'humidité dans un corps de protection (2) constitué de matériau isolant et réalisé par moulage par injection, qui s'étend jusque sur la ligne (1), et
- **que** le corps de protection (2) comporte un élément de fixation (3) écarté de celui-ci pour le montage en position correcte du dispositif dans le véhicule automobile.

2. Dispositif selon la revendication 1, **caractérisé en ce qu'**un condensateur (14) est raccordé en parallèle avec le capteur de vitesse de rotation (11) aux fils (5) qui lui correspondent de la ligne électrique (1), lequel condensateur est également incorporé au corps de protection (2).
